(19) Europäisches Patentamt
European Patent Office
Office européen des brevets

(11) **EP 4 618 219 A1**

(12) **EUROPEAN PATENT APPLICATION**

(43) Date of publication:
**17.09.2025 Bulletin 2025/38**

(21) Application number: **25162683.4**

(22) Date of filing: **10.03.2025**

(51) International Patent Classification (IPC):
**H01M 10/0525** (2010.01)   **H01M 50/403** (2021.01)
**H01M 50/446** (2021.01)   **H01M 50/457** (2021.01)

(52) Cooperative Patent Classification (CPC):
**H01M 10/0525; H01M 50/403; H01M 50/446;
H01M 50/457**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.03.2024 CN 202410276050**

(71) Applicant: **Ningde Amperex Technology Limited
Ningde City, Fujian Province 352100 (CN)**

(72) Inventor: **YAO, Meina
Ningde City, Fujian Province 352100 (CN)**

(74) Representative: **Icosa
83 avenue Denfert-Rochereau
75014 Paris (FR)**

(54) **SECONDARY BATTERY AND ELECTRIC APPARATUS**

(57) A secondary battery includes an electrode assembly (100) of a wound structure. The electrode assembly (100) includes a positive electrode plate (40), a first separator (10), a second separator (20), and a negative electrode plate (30) located between the first separator (10) and the second separator (20). The first separator (10) includes a first base film (11), first bonding layers (12), and a first ceramic coating (13). The first bonding layers (12) are located on two sides of the first base film (11). The first ceramic coating (13) is located on a surface on one side of the first base film (11). The first ceramic coating (13) is located between the first base film (11) and the first bonding layer (12). First ceramic particles in the first ceramic coating (13) include at least one of aluminum oxide, zirconium dioxide, titanium dioxide, or silicon dioxide. The second separator (20) includes a second base film (21), second bonding layers (22), and a second ceramic coating (23). The second bonding layers (22) are located on two sides of the second base film (21). The second ceramic coating (23) is located on a surface on one side of the second base film (21). The second ceramic coating (23) is located between the second base film (21) and the second bonding layer (22). Second ceramic particles in the second ceramic coating (23) include boehmite.

FIG. 1

# EP 4 618 219 A1

## Description

### TECHNICAL FIELD

This application relates to the field of electrochemical technologies, and in particular, to a secondary battery and an electric apparatus.

### BACKGROUND

Due to the advantages of high energy density, long cycle life, low self-discharge rate, and environmental friendliness, secondary batteries (such as lithium-ion batteries) have been widely used in fields such as aviation, aerospace, navigation, and electric vehicles. A lithium-ion battery is composed of components such as a positive electrode plate, a negative electrode plate, and a separator. Performance of the separator plays an important role in overall performance of the lithium-ion battery. However, it is often difficult for existing separators used in lithium-ion batteries to balance energy density, cycling performance, and safety performance of lithium-ion batteries.

### SUMMARY

This application is intended to provide a secondary battery that can balance energy density, cycling performance, and safety performance of the secondary battery, and also provide an electric apparatus using the secondary battery.

It should be noted that, in the summary of this application, a lithium-ion battery is used as an example of a secondary battery to explain this application. However, the secondary battery in this application is not limited to the lithium-ion battery. Specific technical solutions are as follows:

A first aspect of this application provides a secondary battery. The secondary battery includes an electrode assembly. The electrode assembly is a wound structure. The electrode assembly includes a positive electrode plate, a negative electrode plate, a first separator, and a second separator. The negative electrode plate is located between the first separator and the second separator. The first separator includes a first base film, first bonding layers, and a first ceramic coating. The first bonding layers are located on two sides of the first base film. The first ceramic coating is located on a surface on one side of the first base film. The first ceramic coating is located between the first base film and the first bonding layer. The first ceramic coating includes first ceramic particles, and the first ceramic particles include at least one of aluminum oxide, zirconium dioxide, titanium dioxide, or silicon dioxide. The second separator includes a second base film, second bonding layers, and a second ceramic coating. The second bonding layers are located on two sides of the second base film. The second ceramic coating is located on a surface on one side of the second base film. The second ceramic coating is located between the second base film and the second bonding layer. The second ceramic coating includes second ceramic particles, and the second ceramic particles include boehmite.

In the prior art, a ceramic coating of a separator usually includes an oxide and boehmite, both of which have significant impact on the performance of a secondary battery. Oxide coatings have good wettability and electrolyte absorption and electrolyte retention capabilities, and therefore can improve the cycling performance of secondary batteries. However, oxides have high hardness, causing significant wear on machinery, leading to high device costs. Additionally, oxides have a large specific gravity and lack flame retardancy, which are disadvantageous to the energy density and safety of secondary batteries. Compared with oxides, boehmite has lower hardness, higher heat-resistance temperature, lower density, and better adhesion, which can improve the heat resistance and puncture resistance of the separator, enhancing the safety performance and energy density of secondary batteries. However, boehmite has poor electrolyte wettability, which is unfavorable for electrolyte retention and the cycling performance of secondary batteries. This application controls the type of the first ceramic particles in the first separator and the type of the second ceramic particles in the second separator within the scope of this application, allowing the separators in the secondary battery to have ceramic coatings with different characteristics. This balances the advantages of the oxide ceramic coating and boehmite ceramic coating. The first separator has good electrolyte storage capacity and wettability for the electrolyte. The second separator has low costs and low density, and therefore can improve the energy density of the secondary battery. The second separator also has good stability and small thermal shrinkage at high temperature, and therefore can reduce the possibility that shrinkage of the second separator during charge and discharge of the secondary battery causes contact between the positive electrode plate and the negative electrode plate and thus leads to a short circuit, thereby providing high safety performance for the secondary battery. The use of the first separator and the second separator with different ceramic coatings allows the secondary battery to balance safety performance, cycling performance, cost-effectiveness, and energy density. Since boehmite can provide the second separator with higher heat resistance and puncture resistance, placing the second separator between the positive electrode plate and the negative electrode plate can better prevent a short circuit between the positive and negative electrodes in the secondary battery under working conditions such as high temperature and puncture, thereby providing high safety performance for the secondary battery.

In some embodiments of this application, the negative electrode plate includes a negative electrode current collector and a first negative electrode material layer and a second negative electrode material layer that are located on two sides of the negative electrode current collector, along a winding direction of the electrode assembly, a length of the first negative electrode material layer is larger than a length of the second negative electrode material layer, the first separator is located on the side of the first negative electrode material layer of the negative electrode plate, and the second separator is located on the side of the second negative electrode material layer of the negative electrode plate. Oxide ceramics provide the first separator with better wettability and electrolyte absorption and electrolyte retention capabilities, thereby improving the cycling performance of the secondary battery. Disposing the first separator on the side of the longer first negative electrode material layer in the negative electrode plate can allow more of the negative electrode active material to come into contact with more of the electrolyte, further improving the cycling performance of the secondary battery and preventing lithium precipitation. The above disposition can allow the secondary battery to have further improved cycling performance on the basis of having balanced energy density and safety performance.

In some embodiments of this application, the material of the first base film includes at least one of polyimide, polyamide, polysulfone, polyacrylonitrile, polyester, cellulose, polyether ether ketone, polyphenylene sulfide, polyacrylate, polyethylene terephthalate, poly(p-benzamide), polyaryl ether sulfone ketone, aramid, or polysulfonamide, the second base film is made of polyolefin, and a polymer monomer of the polyolefin includes at least one of ethylene, propylene, 1-butene, 1-pentene, 1-hexene, 1-octene, 4-methyl-1-pentene, cyclobutene, cyclopentene, or cyclohexene. The first base film made of the above materials has a large glass transition temperature and good thermal stability. As the internal temperature of the secondary battery rises during the charge and discharge process, the first base film maintains high porosity while having high mechanical strength, allowing smooth flow of the electrolyte and improving the lithium ion transmission rate. The stable pore structure of the first base film can also improve electrolyte absorption and electrolyte retention capabilities, but the first base film is relatively thick. The combination of the first base film and the first ceramic coating can compensate for the poor heat resistance of the first ceramic coating, making the first separator more stable at high temperature. Additionally, the high electrolyte retention of the first base film, can further improve the cycling performance of the secondary battery. The material of the second base film has a low glass transition temperature, but a thinner second base film can be prepared using a wet or dry process with uniaxial or biaxial stretching, so as to compensate for energy density loss caused by a thick first base film. The second base film is combined with the second ceramic coating that has good heat resistance and puncture resistance. The second ceramic coating can better prevent the second base film from shrinking or closing pores at high temperature, providing good safety for the second separator.

In some embodiments of this application, an average particle size of the first ceramic particles is 0.2 $\mu$m to 1.2 $\mu$m, and an average particle size of the second ceramic particles is 0.1 $\mu$m to 1.0 $\mu$m. The first ceramic particles and the second ceramic particles have high specific surface areas, and therefore, controlling the average particle sizes of the first ceramic particles and the second ceramic particles within the above range can improve the electrolyte storage capacity and wettability of the first separator and the second separator, thereby facilitating the secondary battery to further improve its cycling performance while ensuring the energy density and safety performance.

In some embodiments of this application, based on a mass of the first ceramic coating, a mass percentage of the first ceramic particles is 10% to 50%; and based on a mass of the second ceramic coating, a mass percentage of the second ceramic particles is 10% to 50%. With the mass percentage of the first ceramic particles in the first ceramic coating and the mass percentage of the second ceramic particles in the second ceramic coating controlled within the above ranges, the amounts of the ceramic particles in the ceramic coatings are ensured, allowing the ceramic particles to fully exert their corresponding functions; and the energy density and manufacturing costs of the secondary battery are balanced, providing the secondary battery with high cycling performance, safety performance, and energy density.

In some embodiments of this application, the first base film is made of polyethylene terephthalate, and the second base film is made of at least one of polypropylene or polyethylene. Selecting the materials within the above ranges can better improve the safety performance of the secondary battery while ensuring the energy density, thereby improving the cycling performance of the secondary battery.

In some embodiments of this application, a glass transition temperature of the first base film is 80°C to 100°C, and a glass transition temperature of the second base film is 25°C to 50°C. The glass transition temperature of the first base film and the second base film falling within the above ranges can better improve the safety performance of the secondary battery while ensuring the energy density, thereby improving the cycling performance of the secondary battery.

In some embodiments of this application, a porosity of the first base film is 40% to 70%, and a porosity of the second base film is 5% to 50%. The porosities of the first base film and the second base film falling within the above ranges can better improve the safety performance of the secondary battery while ensuring the energy density, thereby improving the cycling performance of the secondary battery.

In some embodiments of this application, a pore size of the first base film is 80 nm to 700 nm, and a pore size of the second base film is 50 nm to 200 nm. The pore sizes of the first base film and the second base film falling within the above ranges can better improve the safety performance of the secondary battery while ensuring the energy density, thereby improving the cycling performance of the secondary battery and reducing production costs.

A second aspect of this application provides an electric apparatus. The electric apparatus includes the secondary battery according to any one of the foregoing embodiments. Therefore, the electric apparatus has high performance.

This application has the following beneficial effects:

This application provides the secondary battery and the electric apparatus. The secondary battery uses the first separator and the second separator with different types of single-layer ceramic coatings. Additionally, controlling the type of the first ceramic particles in the first separator and the type of the second ceramic particles in the second separator within the ranges of this application allows for a thin first separator and second separator, reducing the volume of the secondary battery and providing the secondary battery with high energy density. This also enables the secondary battery to have good electrolyte storage capacity and wettability for the electrolyte. In addition, the second separator has good stability at high temperature and small thermal shrinkage, and therefore can reduce the possibility that shrinkage of the second separator during charge and discharge of the secondary battery causes contact between the positive electrode plate and the negative electrode plate and thus leads to a short circuit, thereby providing high safety performance for the secondary battery. Thus, this can allow the secondary battery to balance the energy density, cycling performance, and safety performance.

Certainly, when any one of the products or methods of this application is implemented, all the advantages described above are not necessarily achieved.

**BRIEF DESCRIPTION OF DRAWINGS**

To describe the technical solutions in the embodiments of this application or the prior art more clearly, the following briefly describes the accompanying drawings required for describing the embodiments or the prior art. Apparently, the accompanying drawings in the following descriptions show some embodiments of this application, and a person of ordinary skill in the art may still derive others drawings from these accompanying drawings.

FIG. 1 is a schematic diagram of a partial structure of an electrode assembly unfolded along a winding direction in some embodiments of this application;

FIG. 2 is a schematic diagram of a partial structure of an electrode assembly unfolded along a winding direction in some other embodiments of this application; and

FIG. 3 is a schematic diagram of a partial structure of an electrode assembly unfolded along a winding direction in some embodiments of this application.

Reference signs:

electrode assembly 100; first separator 10; first base film 11; first bonding layer 12; first ceramic coating 13; second separator 20; second base film 21; second bonding layer 22; second ceramic coating 23; negative electrode plate 30; negative electrode current collector 31; first negative electrode material layer 33; second negative electrode material layer 34; positive electrode plate 40; positive electrode current collector 41; and positive electrode material layer 42.

**DESCRIPTION OF EMBODIMENTS**

The following clearly and completely describes the technical solution in the embodiments of this application with reference to the accompanying drawings in the embodiments of this application. Apparently, the described embodiments are only some rather than all of the embodiments of this application. All other embodiments obtained by skilled persons in the art based on this application shall fall within the protection scope of this application.

It should be noted that, in the specific embodiments of this application, a lithium-ion battery is used as an example of a secondary battery to explain this application. However, the secondary battery in this application is not limited to the lithium-ion battery.

A first aspect of this application provides a secondary battery. The secondary battery includes an electrode assembly. The electrode assembly is a wound structure. The electrode assembly includes a positive electrode plate, a negative electrode plate, a first separator, and a second separator. The negative electrode plate is located between the first separator and the second separator. The positive electrode plate is located on an outermost layer of the electrode assembly. The first separator includes a first base film, first bonding layers, and a first ceramic coating. The first bonding layers are located on two sides of the first base film. The first ceramic coating is located on a surface on one side of the first base film. The first ceramic coating is located between the first base film and the first bonding layer. On a side of the first base film where no first ceramic coating is provided, the first bonding layer is directly applied to the surface of the first base film. It can be understood that the first ceramic coating can be located on either side of the first base film. Specifically, in some embodiments, the first ceramic coating is located on a surface on a side of the first base film facing away from the negative electrode plate. In other embodiments, the first ceramic coating is located on a surface on a side of the first base film close to the negative electrode plate. The first ceramic coating includes first ceramic particles. The first ceramic particles include at least one of aluminum oxide, zirconium dioxide, titanium dioxide, or silicon dioxide. The second separator includes a second base film, second bonding layers, and a second ceramic coating. The second bonding layers are located on two sides of the second base film. The second ceramic coating is located on a surface on one side of the second base film. The second ceramic coating is located between the second base film and the second bonding layer. On a side of the second base film where no second ceramic coating is provided, the second bonding layer is directly applied to the surface of the second base film. It can be understood that the second ceramic coating can be located on either side of the second base film. Specifically, in some embodiments, the second ceramic coating is located on a surface on a side of the second base film facing away from the negative electrode plate. In other embodiments, the second ceramic coating is located on a surface on a side of the second base film close to the negative electrode plate. The second ceramic coating includes second ceramic particles. The second ceramic particles include boehmite.

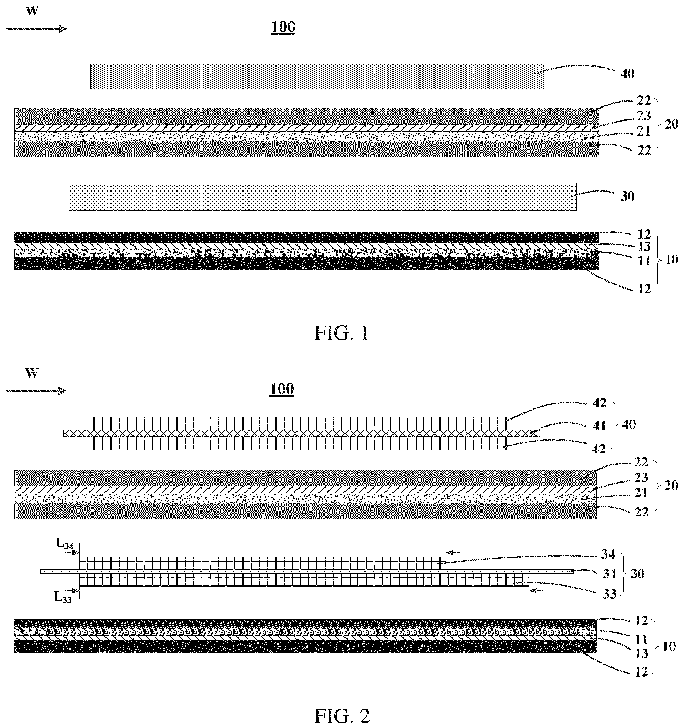

In this application, the structure of the electrode assembly is a wound structure. The winding direction of the electrode assembly is defined to be W. It should be understood by persons skilled in the art that winding directions of the positive electrode plate, the negative electrode plate, the first separator, and the second separator are the same as the winding direction of the electrode assembly. To facilitate understanding of the positional relationship between the positive electrode plate, the negative electrode plate, the first separator, and the second separator in the electrode assembly, FIG. 1 shows a schematic diagram of a partial structure of the electrode assembly unfolded along the winding direction W. As shown in FIG. 1, an electrode assembly 100 includes a first separator 10, a second separator 20, a negative electrode plate 30, and a positive electrode plate 40. The negative electrode plate 30 is located between the first separator 10 and the second separator 20. The positive electrode plate 40 is located on an outermost layer of the electrode assembly 100. The first separator 10 includes a first base film 11, first bonding layers 12, and a first ceramic coating 13. The first bonding layers 12 are located on two sides of the first base film 11. The first ceramic coating 13 is located on a surface on one side of the first base film 11 close to the negative electrode plate 30. The first ceramic coating 13 is located between the first base film 11 and the first bonding layer 12. On a side of the first base film 11 where no first ceramic coating 13 is provided, that is, on a surface on a side of the first base film 11 facing away from the negative electrode plate 30, the first bonding layer 12 is directly applied to the surface of the first base film 11. The second separator 20 includes a second base film 21, second bonding layers 22, and a second ceramic coating 23. The second bonding layers 22 are located on two sides of the second base film 21. The second ceramic coating 23 is located on a surface on a side of the second base film 21 facing away from the negative electrode plate 30. The second ceramic coating 23 is located between the second base film 21 and the second bonding layer 22. On a surface on a side of the second base film 21 where no second ceramic coating 23 is provided, that is, on a surface on a side of the second base film 21 close to the negative electrode plate 30, the second bonding layer 22 is directly applied to the surface of the second base film 21. It should be understood that in some embodiments, the first ceramic coating 13 can alternatively be located on a surface on a side of the first base film 11 facing away from the negative electrode plate 30. In other embodiments, the second ceramic coating 23 can alternatively be located on a surface on a side of the second base film 21 close to the negative electrode plate 30.

With the first ceramic coating provided only on the surface on one side of the first base film in the first separator and the second ceramic coating provided only on the surface on one side of the second base film in the second separator, the first separator and the second separator can have a smaller thickness. This reduces the volume of the secondary battery and decreases the likelihood of energy density loss caused by an increased volume, thereby improving the energy density of the secondary battery.

The first ceramic particles have good wettability and electrolyte absorption and electrolyte retention capabilities. Therefore, using the first ceramic particles of the foregoing type in the first ceramic coating can improve the electrolyte storage capacity and wettability of the first separator, thereby enhancing the cycling performance of the secondary battery. The second ceramic particles feature high heat resistance, high puncture resistance, and low density. Therefore, using the second ceramic particles of the foregoing type in the second ceramic coating can reduce shrinkage of the second separator at high temperature. This decreases the likelihood that shrinkage of the second separator causes contact between the positive electrode plate and the negative electrode plate and thus a short circuit of the secondary battery during charge and discharge of the secondary battery, increasing the binding force on the second separator, thereby improving the safety performance and energy density of the secondary battery.

In this application, the first separator and the second separator with different types of single-layer ceramic coatings are used. Additionally, controlling the type of the first ceramic particles in the first separator and the type of the second ceramic particles in the second separator within the ranges of this application allows for a thin first separator and second separator, reducing the volume of the secondary battery and providing the secondary battery with high energy density. The advantages of the first ceramic particles and the second ceramic particles can also be maintained. The first separator has good electrolyte storage capacity and wettability for the electrolyte. The second separator features low costs and low density, and therefore can increase the energy density of the secondary battery. In addition, the second separator has good stability at high temperature and small thermal shrinkage, and therefore can reduce the possibility that shrinkage of the second separator during charge and discharge of the secondary battery causes contact between the positive electrode plate and the negative electrode plate and thus leads to a short circuit, thereby providing high safety performance for the secondary battery. Thus, this can allow the secondary battery to balance the energy density, cycling performance, and safety performance.

In some embodiments of this application, the negative electrode plate includes a negative electrode current collector and a first negative electrode material layer and a second negative electrode material layer that are located on two sides of the negative electrode current collector, along a winding direction of the electrode assembly, a length of the first negative electrode material layer is larger than a length of the second negative electrode material layer, the first separator is located on the side of the first negative electrode material layer of the negative electrode plate, and the second separator is located on the side of the second negative electrode material layer of the negative electrode plate. As shown in FIG. 2, an electrode assembly 100 includes a first separator 10, a second separator 20, a negative electrode plate 30, and a positive electrode plate 40. The negative electrode plate 30 is located between the first separator 10 and the second separator 20. The second separator 20 is located between the positive electrode plate 40 and the negative electrode plate 30. The positive electrode plate 40 is located on an outermost layer of the electrode assembly 100. The positive electrode plate 40 includes a positive electrode current collector 41 and positive electrode material layers 42 disposed on two sides of the positive electrode current collector 41. The negative electrode plate 30 includes a negative electrode current collector 31, and a first negative electrode material layer 33 and a second negative electrode material layer 34 that are disposed on two sides of the negative electrode current collector 31. Along a winding direction W of the electrode assembly 100, a length $L_{33}$ of the first negative electrode material layer 33 is larger than a length $L_{34}$ of the second negative electrode material layer 34. That the first separator 10 is disposed on one side of the first negative electrode material layer 33 of the negative electrode plate 30 can also be understood as follows: the first separator 10 is adjacent to the first negative electrode material layer 33. That the second separator 20 is disposed on one side of the second negative electrode material layer 34 of the negative electrode plate 30 can also be understood as follows: the second separator 20 is adjacent to the second negative electrode material layer 34. The above arrangement is beneficial to allowing more of the negative electrode active material to come into contact with more of the electrolyte, reducing the risk that electrolyte bridging at the interface between electrolyte and the negative electrode plate causes lithium precipitation in the later cycling stage of the secondary battery. This can allow the secondary battery to have further improved cycling performance on the basis of having balanced energy density and safety performance.

In some embodiments of this application, the second ceramic coating is disposed on a side of the second base film facing away from the negative electrode plate. As shown in FIG. 1 and FIG. 2, the second separator 20 includes a second base film 21, a second bonding layer 22, and a second ceramic coating 23. The second ceramic coating 23 is on a surface on a side of the second base film 21 facing away from the negative electrode plate 30. That is, the second ceramic coating 23 is disposed on a surface on a side of the second base film 21 that is close to and that faces towards the positive electrode plate 40. The second ceramic coating 23 is located between the second base film 21 and the second bonding layer 22. The second ceramic coating 23 is not disposed on a side of the second base film 21 close to the negative electrode plate 30. The second bonding layer 22 is directly disposed on a surface on a side of the second base film 21 close to the negative electrode plate 30. When the positive electrode active material particles in the positive electrode plate have a large particle size or are relatively sharp, during the production or use of the secondary battery, there is a possibility that the positive electrode active material particles may squeeze or even puncture the separator located between the positive electrode plate and the negative electrode plate, causing a short circuit between the positive and negative electrode plates. In the above setup, the second ceramic coating on the side of the second base film is disposed facing away from the negative electrode plate, that is, the second ceramic coating faces towards the positive electrode plate. Boehmite can improve the puncture resistance capability of the separator, and therefore can reduce the possibility of the positive electrode active material particles that have a large particle size or that is relatively sharp puncturing the second separator. This better protects the second base film, thereby improving the safety performance of the secondary battery. Additionally, disposing the second ceramic coating only on one side of the second base film can reduce the thickness of the second separator, thereby decreasing the thickness of the secondary battery and improving the energy density of the secondary battery. Thus, the secondary battery can further improve its safety performance and energy density while maintaining high cycling performance.

In some embodiments of this application, the material of the first base film includes at least one of polyimide, polyamide, polysulfone, polyacrylonitrile, polyester, cellulose, polyether ether ketone, polyphenylene sulfide, polyacrylate, polyethylene terephthalate, poly(p-benzamide), polyaryl ether sulfone ketone, aramid, or polysulfonamide, the second base film is made of polyolefin, and a polymer monomer of the polyolefin includes at least one of ethylene, propylene, 1-butene, 1-pentene, 1-hexene, 1-octene, 4-methyl-1-pentene, cyclobutene, cyclopentene, or cyclohexene. The first base film made of the above materials has a large glass transition temperature and good thermal stability. As the internal temperature of the secondary battery rises during the charge and discharge process, the first base film maintains high porosity while having high mechanical strength, allowing smooth flow of the electrolyte and improving the lithium ion transmission rate. The stable pore structure of the first base film can also improve electrolyte absorption and electrolyte retention capabilities, but the first base film is relatively thick. The combination of the first base film and the first ceramic coating can compensate for the poor heat resistance of the first ceramic coating, making the first separator more stable at high temperature. Additionally, the high electrolyte retention of the first base film can further improve the cycling performance of the secondary battery. The material of the second base film has a low glass transition temperature, but a thinner second base film can be prepared using a wet or dry process with uniaxial or biaxial stretching, so as to compensate for energy density loss caused by a thick first base film. The second base film is combined with the second ceramic coating that has good heat resistance and puncture resistance. The second ceramic coating can better prevent the second base film from shrinking or closing pores at high temperature, providing high safety for the second separator. This application does not particularly limit a weight-average molecular weight of the material of the first base film, as long as the objectives of this application can be achieved. For example, the weight-average molecular weight of the material of the first base film can be $2 \times 10^5$ to $1.5 \times 10^6$. This application does not particularly limit a weight-average molecular weight of the material of the second base film, as long as the objectives of this application can be achieved. For example, the weight-average molecular weight of the material of the second base film can be $2 \times 10^5$ to $1.5 \times 10^6$.

In some embodiments of this application, the first base film is made of polyethylene terephthalate, and the second base film is made of at least one of polypropylene or polyethylene. When the materials of the above types are selected for the first base film and the second base film, a double-separator structure including the first base film and the second base film is provided in the secondary battery. This is beneficial to further improving the safety performance and cycling performance of the secondary battery while ensuring the energy density.

In some embodiments of this application, an average particle size of the first ceramic particles is 0.2 $\mu$m to 1.2 $\mu$m, and an average particle size of the second ceramic particles is 0.1 $\mu$m to 1.0 $\mu$m. For example, the average particle size of the first ceramic particles is 0.2 $\mu$m, 0.4 $\mu$m, 0.6 $\mu$m, 0.8 $\mu$m, 1.0 $\mu$m, 1.2 $\mu$m, or any one of the two numerical ranges. For example, the average particle size of the second ceramic particles is 0.1 $\mu$m, 0.2 $\mu$m, 0.3 $\mu$m, 0.4 $\mu$m, 0.5 $\mu$m, 0.6 $\mu$m, 0.7 $\mu$m, 0.8 $\mu$m, 0.9 $\mu$m, 1.0 $\mu$m, or any one of the two numerical ranges. The first ceramic particles and the second ceramic particles have high specific surface areas, and therefore, controlling the average particle sizes of the first ceramic particles and the second ceramic particles within the above range can improve the electrolyte storage capacity and wettability of the first separator and the second separator, thereby facilitating the secondary battery to further improve its cycling performance while ensuring the energy density and safety performance.

In this application, there is no particular limitation on the method of controlling the average particle sizes of the first ceramic particles and the second ceramic particles, as long as the objectives of this application can be achieved. For example, controlling can be achieved through methods such as crushing and screening.

In some embodiments of this application, based on a mass of the first ceramic coating, a mass percentage of the first ceramic particles is 10% to 50%. For example, the mass percentage of the first ceramic particles is 10%, 20%, 25%, 30%, 36%, 42%, 50%, or any value in a range defined by any two of the foregoing values. Controlling the mass percentage of the first ceramic particles in the first ceramic coating within the above range ensures the amount of the first ceramic particles in the first ceramic coating, allowing the first ceramic particles to fully exert corresponding functions, and thus obtaining a first separator with good electrolyte storage capacity and wettability. Applying the first separator to the secondary battery is beneficial to providing the secondary battery with high cycling performance while ensuring the energy density and manufacturing cost of the secondary battery.

In some embodiments of this application, based on a mass of the second ceramic coating, a mass percentage of the second ceramic particles is 10% to 50%. For example, the mass percentage of the second ceramic particles is 10%, 20%, 25%, 30%, 36%, 42%, 50%, or any value in a range defined by any two of the foregoing values. Controlling the mass percentage of the second ceramic particles in the second ceramic coating within the above range ensures the amount of the second ceramic particles in the second ceramic coating, allowing the second ceramic particles to fully exert corresponding functions, and thus obtaining a second separator with good thermal stability and puncture resistance. Applying the second separator to the secondary battery is beneficial to providing the secondary battery with high safety performance while ensuring the energy density and manufacturing cost of the secondary battery.

In some embodiments of this application, the first ceramic coating further includes a first ceramic coating binder, and the second ceramic coating further includes a second ceramic coating binder. This application does not particularly limit the types of the first ceramic coating binder and the second ceramic coating binder, as long as the objectives of this application can be achieved. For example, the first ceramic coating binder and the second ceramic coating binder each independently include at least one of styrene-butadiene rubber, polyvinyl alcohol, polyvinylidene fluoride, polyacrylic acid, polymethyl methacrylate, polybutyl acrylate, or polyacrylonitrile. This application does not particularly limit the amount of the first ceramic coating binder in the first ceramic coating and the amount of the second ceramic coating binder in the second ceramic coating. Persons skilled in the art can make selections based on actual needs, as long as the objectives of this application can be achieved. For example, based on a mass of the first ceramic coating, a mass percentage of the first ceramic coating binder is 50% to 90%. Based on a mass of the second ceramic coating, a mass percentage of the second ceramic coating binder is 50% to 90%.

In some embodiments of this application, a glass transition temperature of the first base film is 80°C to 100°C, and a glass transition temperature of the second base film is 25°C to 50°C. For example, the glass transition temperature of the first base film is 80°C, 83°C, 85°C, 87°C, 90°C, 92°C, 95°C, 97°C, 100°C, or any value in a range defined by any two of the foregoing values. For example, the glass transition temperature of the second base film is 25°C, 27°C, 30°C, 32°C, 35°C, 37°C, 40°C, 42°C, 45°C, 47°C, 50°C, or any value in a range defined by any two of the foregoing values. When the glass transition temperature of the first base film and the glass transition temperature of the second base film are within the above ranges, the use of a double-separator structure of the first base film and the second base film in the secondary battery is beneficial to improving the safety performance of the secondary battery and the cycling performance of the secondary battery while ensuring the energy density.

This application does not particularly limit the manner of controlling the glass transition temperature of the first base film and the glass transition temperature of the second base film, as long as the objectives of this application can be achieved. For example, controlling can be achieved by selecting the first base film and the second base film of different types.

In some embodiments of this application, a porosity of the first base film is 40% to 70%, and a porosity of the second base film is 5% to 50%. For example, the porosity of the first base film is 40%, 44%, 49%, 55%, 60%, 65%, 70%, or any value in a range defined by any two of the foregoing values. For example, the porosity of the second base film is 5%, 10%, 15%, 22%, 25%, 32%, 40%, 50%, or any value in a range defined by any two of the foregoing values. Controlling the porosities of the first base film and the second base film within the above ranges allows the first separator and the second separator to have high strength, improving the safety performance of the secondary battery. The secondary battery has good kinetic performance during charge and discharge transmission and can absorb more electrolyte. The first separator and the second separator have good wettability, which is conducive to transmission of lithium ions, thereby improving the cycling performance of the secondary battery and extending the cycle life of the secondary battery.

This application does not particularly limit the manner of controlling the porosity of the first base film and the porosity of the second base film, as long as the objectives of this application can be achieved. For example, different commercially available first base films and second base films with different porosities can be selected. The porosities of the first base films and the second base films can be determined using the test method in "test for porosities of first base film and second base film" in this application. A first base film and a second base film with required porosities are selected.

In some embodiments of this application, a pore size of the first base film is 80 nm to 700 nm, and a pore size of the second base film is 50 nm to 200 nm. For example, the pore size of the first base film is 80 nm, 100 nm, 150 nm, 200 nm, 250 nm, 300 nm, 400 nm, 500 nm, 600 nm, 700 nm, or any value in a range defined by any two of the foregoing values. For example, the pore size of the second base film is 50 nm, 60 nm, 70 nm, 80 nm, 90 nm, 100 nm, 150 nm, 180 nm, 200 nm, or any value in a range defined by any two of the foregoing values. Controlling the average pore size of the first base film and the average pore size of the second base film within the above ranges facilitates transmission of lithium ions. Lithium ions have high kinetic performance during charge and discharge transmission of the secondary battery and can absorb more electrolyte. The first separator and the second separator have good wettability, thereby improving the cycling performance of the secondary battery. Therefore, the secondary battery has high safety performance and cycling performance while ensuring the energy density.

This application does not particularly limit the manner of controlling the pore sizes of the first base film and the second base film, as long as the objectives of this application can be achieved. For example, different commercially available first base films and second base films with different pore sizes can be selected. Average pore sizes of the first base films and the second base films can be determined using the test method in "test for pore sizes of first base film and second base film" in this application. A first base film and a second base film with required average pore sizes are selected.

This application does not particularly limit the thicknesses of the first base film and the second base film, as long as the objectives of this application can be achieved.

This application does not particularly limit the thicknesses of the first separator and the second separator, as long as the objectives of this application can be achieved. For example, the thickness of the first separator is 6.5 $\mu$m to 12.5 $\mu$m, and the thickness of the second separator is 4.8 $\mu$m to 7.5 $\mu$m.

In some embodiments of this application, the first bonding layer includes a first binder, and the second bonding layer includes a second binder. The first binder and the second binder each independently include at least one of poly(vinylidene difluoride), polyacrylonitrile, polyethylene oxide, or polyimide. Selecting the first binder and the second binder of the above types helps to increase adhesion between the first base film and the first bonding layer, and between the second base film and the second bonding layer. This enhances the adhesion between the first separator and the positive electrode plate, between the first separator and the negative electrode plate, and between the second separator and the negative electrode plate. This strengthens the interfaces between the first separator and the positive electrode plate, between the first separator and the negative electrode plate, and between the second separator and the negative electrode plate, facilitating transmission of lithium ions. This also reduces the likelihood of fall-off of the first ceramic coating and the second ceramic coating, thereby improving the cycling performance of the secondary battery. Thus, the secondary battery has a long cycle life and high safety performance while ensuring the energy density. This application does not particularly limit the weight-average molecular weights of the first binder and the second binder, as long as the objectives of this application can be achieved. For example, the weight-average molecular weights of the first binder and the second binder can be $1.5 \times 10^4$ to $9 \times 10^6$.

In some embodiments of this application, the first bonding layer can further include a first thickener, and the second bonding layer can further include a second thickener. Based on the mass of the first bonding layer, a mass percentage of the first thickener is 0.3% to 6%. Based on the mass of the second bonding layer, a mass percentage of the second thickener is 0.3% to 6%. Applying the first thickener to the first bonding layer and the second thickener to the second bonding layer is beneficial to increasing the stability of the first bonding layer slurry and the second bonding layer slurry, thereby preventing sedimentation of components in the first bonding layer slurry and the second bonding layer slurry. This application does not particularly limit the types of the first thickener and the second thickener, as long as the objectives of this application can be achieved. For example, the first thickener and the second thickener are each independently selected from at least one of hydroxyethyl cellulose, methyl hydroxyethyl cellulose, sodium carboxymethyl cellulose, polyacrylamide, or sodium alginate.

The negative electrode current collector is not particularly limited in this application, provided that the objectives of this application can be achieved. For example, the negative electrode current collector can include copper foil, copper alloy foil, nickel foil, stainless steel foil, titanium foil, nickel foam, copper foam, composite current collector (such as carbon-copper composite current collector, nickel-copper composite current collector, or titanium-copper composite current collector), or the like. The first negative electrode material layer and the second negative electrode material layer of this application each independently include a negative electrode active material. This application does not particularly limit a type of the negative electrode active material, provided that the objectives of this application can be achieved. For example, the negative electrode active material may include at least one of natural graphite, artificial graphite, a mesocarbon microbead (MCMB), hard carbon, soft carbon, silicon, silicon-carbon composite, $SiO_x$ (0<x<2), Li-Sn alloy, Li-Sn-O alloy, Sn, SnO, $SnO_2$, spinel-structured lithium titanate $Li_4Ti_5O_{12}$, Li-Al alloy, or lithium metal. In this application, thicknesses of the negative electrode current collector, the first negative electrode material layer, and the second negative electrode material layer are not particularly limited, provided that the objectives of this application can be achieved. For example, a thickness of the negative electrode current collector is 4 $\mu$m to 15 $\mu$m, a thickness of the first negative electrode material layer is 30 $\mu$m to 130 $\mu$m, and a thickness of the second negative electrode material layer is 30 $\mu$m to 130 $\mu$m. Optionally, the first negative electrode material layer and the second negative electrode material layer can further include a conductive agent and a binder. This application does not particularly limit the mass ratios of the negative electrode active material, the conductive agent, and the binder in the first negative electrode material layer and the second negative electrode material layer, as long as the objectives of this application can be achieved.

In some embodiments of this application, the positive electrode plate includes a positive electrode current collector and a positive electrode material layer disposed on one or two sides of the positive electrode current collector. This application does not particularly limit the positive electrode current collector, as long as the objectives of this application can be achieved. For example, the positive electrode current collector can include aluminum foil, aluminum alloy foil, composite current collector (such as aluminum-carbon composite current collector), or the like. The positive electrode material layer of this application includes a positive electrode active material. This application does not particularly limit the type of the positive electrode active material, as long as the objectives of this application can be achieved. For example, the positive electrode active material layer may include at least one of nickel cobalt lithium manganate (NCM811, NCM622, NCM523, NCM111), lithium nickel cobalt aluminate, lithium iron phosphate, lithium-rich manganese-based materials, lithium cobalt oxide ($LiCoO_2$), lithium manganate, lithium iron manganese phosphate, or lithium titanate. In this application, the positive electrode active material may further include but is not limited to a non-metal element. For example, the non-metal element includes at least one of fluorine, phosphorus, boron, chlorine, silicon, or sulfur. In this application, thicknesses of the positive electrode current collector and the positive electrode material layer are not particularly limited, provided that the objectives of this application can be achieved. For example, the thickness of the positive electrode current collector is 9 $\mu$m to 15 $\mu$m, and the single-surface thickness of the positive electrode material layer is 30 $\mu$m to 120 $\mu$m. In this application, the positive electrode material layer can further include a conductive agent and a binder. This application does not particularly limit the types of the conductive agent and the binder in the positive electrode material layer, as long as the objectives of this application can be achieved. This application does not particularly limit the mass ratio of the positive electrode active material, the conductive agent, and the binder in the positive electrode material layer, as long as the objectives of this application can be achieved.

This application does not particularly limit the types of the conductive agent in the positive electrode material layer, the first negative electrode material layer, and the second negative electrode material layer, as long as the objectives of this application can be achieved. For example, the conductive agent can include but is not limited to at least one of conductive carbon black (Super P), carbon nanotubes (CNTs), carbon fiber, flake graphite, Ketjen black, graphene, metal materials, or conductive polymers. The carbon nanotubes may include but are not limited to single-walled carbon nanotubes or multi-walled carbon nanotubes. The carbon fibers may include but are not limited to vapor grown carbon fibers (VGCF) and/or carbon nanofibers. The above metal material may include but is not limited to metal powder and/or metal fiber, and specifically, the metal may include but is not limited to at least one of copper, nickel, aluminum, or silver. The above conductive polymer may include but is not limited to at least one of polyphenylene derivative, polyaniline, polythiophene, polyacetylene, or polypyrrole. This application does not particularly limit the types of the binder in the positive electrode material layer, the first negative electrode material layer, and the second negative electrode material layer, as long as the objectives of this application can be achieved. For example, the binder can include but is not limited to at least one of polyvinylidene fluoride, a vinylidene fluoride-hexafluoropropylene copolymer, polyamide, polyacrylonitrile, polyacrylic ester, polyacrylic acid, polyacrylate, polyvinylpyrrolidone, polyvinyl ether, polymethyl methacrylate, polytetrafluoroethylene, or polyhexafluoropropylene. The types of the conductive agents and the binders in the positive electrode material layer, the first negative electrode material layer, and the second negative electrode material layer can be the same or different.

In some embodiments of this application, the secondary battery of this application further includes an electrolyte and a packaging bag. The electrode assembly and the electrolyte are contained in the packaging bag. This application does not particularly limit the electrolyte and the packaging bag. Persons skilled in the art can select a known electrolyte and packaging bag based on actual conditions, as long as the objectives of this application can be achieved.

This application does not particularly limit the preparation method of the first separator, as long as the objectives of this application can be achieved. For example, the preparation method of the first separator includes but is not limited to the following steps: (1) mix a material of the first bonding layer and the first thickener to uniformity to obtain a first bonding layer slurry; (2) mix the first ceramic particles and the first ceramic coating binder to uniformity to obtain a first ceramic coating slurry; (3) apply the first ceramic coating slurry to one surface of the first base film, followed by drying so as to form the first ceramic coating on one surface of the first base film; and apply the first bonding layer slurry to a surface of the first ceramic coating facing away from the first base film, followed by drying so as to obtain the first separator coated with the first ceramic coating and the first bonding layer coated on one surface; and (4) apply only the first bonding layer slurry to the other surface of the first base film, followed by drying so as to obtain the first separator.

This application does not particularly limit the preparation method of the second separator, as long as the objectives of this application can be achieved. For example, the preparation method of the second separator includes but is not limited to the following steps: (1) mix the second binder and the second thickener to uniformity to obtain a second bonding layer slurry; (2) mix the second ceramic particles and the second ceramic coating binder to uniformity to obtain a second ceramic coating slurry; (3) apply the second ceramic coating slurry to one surface of the second base film, followed by drying so as to form the second ceramic coating on one surface of the second base film; and apply the second bonding layer slurry to a surface of the second ceramic coating facing away from the second base film, followed by drying so as to obtain the second separator coated with the second ceramic coating and the second bonding layer coated on one surface; and (4) apply only the second bonding layer slurry to the other surface of the second base film, followed by drying so as to obtain the second separator.

The secondary battery in this application is not particularly limited, and may include any apparatus in which electrochemical reactions take place. In an embodiment of this application, the secondary battery can include but is not limited to a lithium-ion secondary battery (lithium-ion battery), a sodium-ion secondary battery (sodium-ion battery), a lithium polymer secondary battery, or a lithium-ion polymer secondary battery.

This application does not particularly limit the preparation method of the secondary battery, and a well-known preparation method in the art can be used, as long as the objectives of this application can be achieved. For example, the preparation method of the secondary battery includes but is not limited to the following steps: stacking the positive electrode plate, the second separator, the negative electrode plate, and the first separator in sequence; performing operations such as winding and folding as needed to obtain an electrode assembly of a wound structure; and placing the electrode assembly into a packaging bag, and injecting the electrolyte into the packaging bag, and sealing it to obtain the secondary battery.

A second aspect of this application provides an electric apparatus. The electric apparatus includes the secondary battery according to any one of the foregoing embodiments. Therefore, the electric apparatus has high performance.

This application does not particularly limit the electric apparatus, which can be any electric apparatus known in the prior art. For example, the electric apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a power-assisted bicycle, a bicycle, a lighting appliance, a toy, a game console, a clock, an electric tool, a flash lamp, a camera, a large household battery, or a lithium-ion capacitor.

## Examples

The following describes the embodiments of this application more specifically by using examples and comparative examples. Various tests and evaluations are performed in the following methods.

## Test method and device

**Sampling method of first separator and second separator:**

The lithium-ion batteries in the tested examples and comparative examples were disassembled to take out the first separators and the second separators. Dimethyl carbonate (DMC) soaking was performed for 20 min to remove residual electrolytes. The first separators and the second separators were then placed in an oven, and dried at 60°C for 12 h to obtain samples of the first separators and the second separators. The above sampling method was used for the following average particle size tests for the first ceramic particles and the second ceramic particles.

**Sampling method of first base film and second base film:**

The obtained first separator and second separator were separately placed into containers, with an appropriate amount of N-methylpyrrolidone (NMP) added. They were subjected to ultrasonication for 3 h in an ultrasonic instrument with a heating function, with the temperature controlled at 45°C. After the first separator and the second separator became completely transparent, they were taken out to obtain the first base film and the second base film. The first base film and the second base film obtained by the above method were used in the following tests for the glass transition temperature, porosities, and pore sizes of the first base film and the second base film.

**Test for average particle sizes of first ceramic particles and second ceramic particles:**

A cross-section of the first separator or the second separator along the thickness direction was prepared through argon ion polishing. The cross-section of the first separator or the second separator was observed using a scanning electron microscope (SEM) to separately measure the equivalent diameters (that is, an irregular cross-section of a particle was converted into a circle with the same area to measure the diameter of the circle) of 10 first ceramic particles or 10 second ceramic particles. The respective average values were calculated to obtain the average particle size of the first ceramic particles or the average particle size of the second ceramic particles.

**Test for glass transition temperature of first base film and second base film:**

A differential scanning calorimeter (DSC) was used to test the glass transition temperature of the first base film and the second base film. The specific steps are as follows:
Molds were used to punch samples from the first base film and the second base film respectively (persons skilled in the art can choose used molds with common sizes and shapes based on factors such as the size, shape, and test device requirements of the test object). The prepared samples were packaged in self-sealing bags to avoid contamination. During testing, the samples were taken out and placed in a crucible. The crucible was placed in a furnace, and heated from -100°C to 800°C at a heat rise speed of 5°C/min. The temperature change was controlled through a program. The relationship between power differences (heat flow rates) between the sample and the reference material and the temperature was measured as the temperature changed, so as to obtain information such as the melting point, crystallinity, and crystallization temperature of the test sample. The glass transition temperature of the test sample was obtained from the DSC curve.

**Porosity test for first base film and second base film:**

The gas displacement method was used for testing. Molds were used to punch samples from the first base film and the second base film, respectively (persons skilled in the art can choose molds with common sizes and shapes based on factors such as the size, shape, and test device requirements of the test object). The true volume $V_0$ of the sample was measured using a true density tester. The apparent volume $V$ of the sample could be calculated by measuring the area and thickness of the sample. The percentage $P$ of pore volume to the total area of the sample was $(V-V_0)/V \times 100\%$, which gave the porosity of the first base film or the second base film.

**Pore size test for first base film and second base film:**

Specific steps are as follows.

(1) Pores of the base film under test were completely wetted and filled with anhydrous ethanol. Due to capillary action, positive pressure was formed inside the pores.
(2) The base film was placed into a sealed chamber, and gas pressure was used to extrude the liquid out of the capillary pores.
(3) According to the relative relationship between pressure $\Delta P$ applied when the liquid in a single pore was completely extruded out of the capillary pore and the pore diameter d, the pore size of the separator can be obtained according to the Laplace equation. The Laplace equation is shown as follows:

$$d = -4\gamma\cos\theta/\Delta P \times 100\%$$

where d was the pore diameter (pore size), $\Delta P$ was the pressure, $\gamma$ was the surface tension of anhydrous ethanol, and $\theta$ was the contact angle between the separator and anhydrous ethanol. At different pressures, the liquid in the separator would be extruded successively, generating a certain gas penetration flow rate. The pore size and pore size distribution can be calculated based on the relationship between pressures and flow rate changes.

**Thickness test of lithium-ion battery:**

The test pressure was adjusted to 600 g by adding or removing weights. A 3 mm gauge block was placed on the platform. after white buttons on two sides were pressed, a panel pressure gap battery thickness gauge (PPG battery thickness gauge) automatically sent in the gauge block and started testing. Any 9 points were tested in sequence. A calibration tolerance was $\pm 0.02$ mm, and only points within the specification could be used. The lithium-ion battery was hold with one hand, with the surface having bar code facing upwards on the platform. The bar code was scanned first, then the white buttons on the two sides were pressed so that the instrument automatically sent in the lithium-ion battery and started testing. The test result was recorded, which was the thickness of the lithium-ion battery.

The thickness of the lithium-ion battery characterizes the energy density of the lithium-ion battery. For the same volume, a greater thickness of the lithium-ion battery indicates a lower energy density.

**Hot-box test:**

Under the condition of 25°C, the lithium-ion battery was charged to 4.5 V at a constant current of 2C rate, and then charged to a current of 0.02C rate at a constant voltage of 4.5 V. The lithium-ion battery was placed in a test chamber with circulating air convection, a temperature of 25°C, and a humidity of 80%, and then left standing for 5 min. The temperature of the test chamber was raised to 130°C at a speed of 5 °C/min, and maintained at 130°C for 10 min before the test stopped. Whether the lithium-ion battery caught fire or exploded was checked. If it did not catch fire or explode, it passed the test. 10 batteries were tested in each example and comparative example. Pass rate in hot-box test at 130°C = number of passes in hot-box test at 130°C/10.

Under the condition of 25°C, the lithium-ion battery was charged to 4.5 V at a constant current of 2C rate, and then charged to a current of 0.02C rate at a constant voltage of 4.5 V. The lithium-ion battery was placed in a test chamber with circulating air convection, a temperature of 25°C, and a humidity of 80%, and then left standing for 5 min. The temperature of the test chamber was raised to 132°C at a speed of 5 °C/min, and maintained at 132°C for 10 min before the test stopped. Whether the lithium-ion battery caught fire or exploded was checked. If it did not catch fire or explode, it passed the test. 10 batteries were tested in each example and comparative example. Pass rate in hot-box test at 132°C = number of passes in hot-box test at 132°C/10.

The pass rate in the hot-box test characterizes the safety performance of the lithium-ion battery. A higher pass rate in the hot-box test means higher safety performance of the lithium-ion battery.

**Cycling performance test:**

Under the condition of 25°C, the lithium-ion battery was charged to 4.5 V at a constant current of 2C rate, and then charged to a current of 0.02C rate at a constant voltage of 4.5 V. After left standing for 5 min, it was discharged to 3.0 V at a constant current of 0.7C rate. This was the first cycle, and the discharge capacity was recorded. The above process was repeated to allow the lithium-ion battery to be subjected to charge and discharge cycles. The test was stopped when 1000 cycles (cls) were completed. The capacity retention rate was calculated as an indicator for evaluating the cycling performance of the lithium-ion battery.

Capacity retention rate (%) = (discharge capacity after 1000 cycles/discharge capacity after the first cycle) $\times$ 100%.

A higher capacity retention rate means higher cycling performance of the lithium-ion battery.

**Example 1-1**

<Preparation of first separator>

A first base film with a thickness of 12 $\mu$m and a glass transition temperature $Tg_1$ of 90°C was used. A material of the first base film was polyethylene terephthalate (PET). A porosity of the first base film was 55%, and a pore size of the first base film was 300 nm (manufacturer: DuPont, model: FR543).

Poly(vinylidene difluoride) (PVDF, Mw=$8.5\times10^6$) and a thickener sodium carboxymethyl cellulose (Mw=$8\times10^5$) were mixed at a mass ratio of 98.0:2.0, with deionized water added as a solvent. The foregoing substances were stirred to uniformity to form a first bonding layer slurry with a solid content of 75 wt%.

First ceramic particles aluminum oxide ($Al_2O_3$) and a first ceramic coating binder styrene-butadiene rubber (Mw=$7\times10^6$) were mixed, with deionized water added as a solvent. The foregoing substances were stirred to uniformity to form a first ceramic coating slurry with a solid content of 30 wt%.

The first ceramic coating slurry was applied to one surface of the first base film, and dried at 60°C to form a first ceramic coating on the surface of the first base film. The first bonding layer slurry was applied to a surface of the first ceramic coating facing away from the first base film, and dried at 60°C to obtain a first separator with the first ceramic coating and the first bonding layer applied on one surface. Then, the first bonding layer slurry was applied to the other surface of the first base film, and dried at 60°C to obtain the first separator. A coating weight of the first bonding layer was 1 mg/cm$^2$, a coating weight of the first ceramic coating was 10 mg/cm$^2$, and an average particle size of the first ceramic particles was 1 $\mu$m. Based on a mass of the first ceramic coating, a mass percentage of the first ceramic particles was $W_{11}$=30%, and a mass percentage of the first ceramic coating binder was $W_{12}$=70%. The thickness of the first ceramic coating was 2.2 $\mu$m, and the thickness of the first bonding layer was 1.3 $\mu$m.

<Preparation of second separator>

A second base film with a thickness of 7 $\mu$m and a glass transition temperature $Tg_2$ of 40°C was used. A material of the second base film was polypropylene and polyethylene, with a mass ratio of polypropylene to polyethylene of 1:1. A porosity of the second base film was 18%, and a pore size of the second base film was 100 nm (manufacturer: Celgard, model: 2325).

Poly(vinylidene difluoride) (PVDF, Mw=$8.5\times10^6$) and a thickener sodium carboxymethyl cellulose (Mw=$8\times10^5$) were mixed at a mass ratio of 98.0:2.0, with deionized water added as a solvent. The foregoing substances were stirred to uniformity to form a second bonding layer slurry with a solid content of 75 wt%.

Second ceramic particles boehmite ($\gamma$-AlOOH) and a second ceramic coating binder styrene-butadiene rubber (Mw=$7\times10^6$) were mixed, with deionized water added as a solvent. The foregoing substances were stirred to uniformity to form a second ceramic coating slurry with a solid content of 40 wt%.

The second ceramic coating slurry was applied to one surface of the second base film, and dried at 60°C to form a second ceramic coating on the surface of the second base film. The second bonding layer slurry was applied to a surface of the first ceramic coating facing away from the first base film, and dried at 60°C to obtain a second separator with the second ceramic coating and the second bonding layer applied on one surface. Then, the second bonding layer slurry was applied to the other surface of the second base film, and dried at 60°C to obtain the second separator. A coating weight of the second bonding layer was 0.6 mg/cm$^2$, a coating weight $CW_2$ of the second ceramic coating was 10 mg/cm$^2$, and an average particle size of the second ceramic particles was 0.5 $\mu$m. Based on a mass of the second ceramic coating, a mass percentage of the second ceramic particles was $W_{21}$=30%, and a mass percentage of the second ceramic coating binder was $W_{22}$=70%. The thickness of the second ceramic coating was 2.0 $\mu$m, and the thickness of the first bonding layer was 1.0 $\mu$m.

<Preparation of negative electrode plate>

A negative electrode active material artificial graphite, styrene-butadiene rubber, and sodium carboxymethyl cellulose were mixed at a mass ratio of 98.0:1.0:1.0, with deionized water added as a solvent. The foregoing substances were stirred to uniformity to obtain a first negative electrode slurry with a solid content of 70 wt%. In addition, the first negative electrode slurry was also used as a second negative electrode slurry. The first negative electrode slurry was applied to one surface of a negative electrode current collector copper foil with a thickness of 6 $\mu$m, and dried at 90°C to form a first negative electrode material layer with a thickness of 50 $\mu$m. The second negative electrode slurry was applied to the other surface of the negative electrode current collector copper foil, and dried at 90°C to form a second negative electrode material layer with a thickness of 50 $\mu$m, to obtain a negative electrode plate with a thickness of 106 $\mu$m. The coated negative electrode plate was subjected to cold pressing, and then cut into samples with specifications of 70 mm $\times$ 800 mm for later use. A compacted density of the first negative electrode material layer was 1.755 g/cm$^3$, with a length of 720 mm, and a compacted density of the second negative electrode material layer was 1.755 g/cm$^3$, with a length of 680 mm.

<Preparation of positive electrode plate>

A positive electrode active material lithium cobalt oxide, a conductive agent conductive carbon black, and a positive electrode binder poly(vinylidene difluoride) (PVDF) were mixed at a mass ratio of 97:2.0:1.0, with N-methylpyrrolidone (NMP) added as a solvent. The foregoing substances were stirred thoroughly to uniformity prepare a positive electrode slurry with a solid content of 75 wt%. The positive electrode slurry was evenly applied to one surface of a positive electrode current collector aluminum foil with a thickness of 10 $\mu$m, and dried at 90°C to form a positive electrode material layer with a thickness of 55 $\mu$m. The positive electrode slurry was applied to the other surface of the positive electrode current collector aluminum foil, and dried at 90°C to form a positive electrode material layer with a thickness of 55 $\mu$m, to obtain a positive electrode plate coated with the positive electrode material layers on two surfaces and with a thickness of 120 $\mu$m. The coated positive electrode plate was subjected to cold pressing, and then cut into samples with specifications of 62 mm $\times$ 760 mm for later use. Compacted density of the positive electrode material layer was 4.50 g/cm$^3$.

<Preparation of electrolyte>

In a glove box filled with dry argon atmosphere, propylene carbonate (PC), diethyl carbonate (DEC), and ethylene carbonate (EC) were mixed at a mass ratio of 1:1:1 to obtain a base solvent. Then a lithium hexafluorophosphate (LiPF6) lithium salt was added to the base solvent and they were mixed thoroughly to uniformity to obtain an electrolyte. Based on a mass of the electrolyte, a mass percentage of $LiPF_6$ was 12%, with the remainder accounted by the base solvent.

<Preparation of lithium-ion battery>

The prepared positive electrode plate, second separator, negative electrode plate, and first separator were stacked in sequence, and then wound to obtain an electrode assembly. An aluminum tab was used to weld and lead out a positive electrode tab and a nickel tab was used to weld and lead out a negative electrode tab. The first ceramic coating in the first separator faced away from the negative electrode plate, and the second ceramic coating in the second separator faced away from the negative electrode plate. The first separator was disposed on the side of the first negative electrode material layer of the negative electrode plate, and the second separator was disposed on the side of the second negative electrode material layer of the negative electrode plate (refer to FIG. 2 for the structure, but not limited to FIG. 2). The electrode assembly was placed into an aluminum-plastic film, and dried in a vacuum oven at 80°C for 12 h to remove moisture. The electrolyte was injected, followed by vacuum sealing, standing, formation (charged at a constant current of 0.02C rate to 3.5 V, and charged at a constant current of 0.1C rate to 3.9 V), grading, shaping, and other processes to obtain a lithium-ion battery.

### Example 1-2

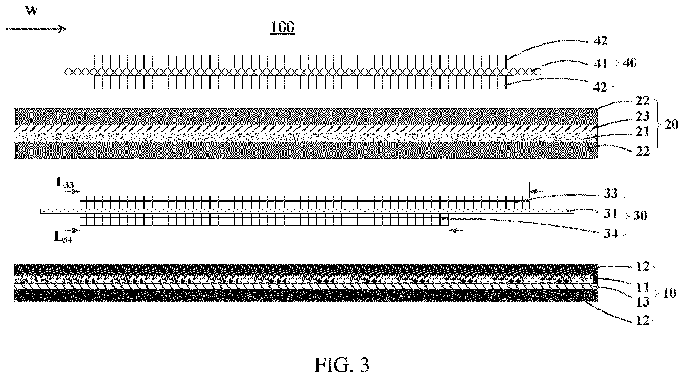

The same as Example 1-1 except that in <preparation of lithium-ion battery>, the second separator was disposed on the side of the first negative electrode material layer of the negative electrode plate, and the first separator was disposed on the side of the second negative electrode material layer of the negative electrode plate (refer to FIG. 3 for the structure, but not limited to FIG. 3).

### Example 1-3 to Example 1-5

The same as Example 1-1 except that the type of the first ceramic particles was adjusted according to Table 1.

### Example 2-1 to Example 2-4

The same as Example 1-1 except that related preparation parameters were adjusted according to Table 2.

### Example 3-1 to Example 3-16

The same as Example 1-1 except that related preparation parameters were adjusted according to Table 3.
When the mass percentage of the first ceramic particles $W_{11}$ changed, the mass percentage of the first ceramic coating binder $W_{12}$ changed accordingly. The sum of the mass percentages of the first ceramic particles and the first ceramic coating binder was 100%. When the mass percentage of the second ceramic particles $W_{21}$ changed, the mass percentage of the second ceramic coating binder $W_{22}$ changed accordingly. The sum of the mass percentages of the second ceramic particles and the second ceramic coating binder was 100%.

**Example 4-1 to Example 4-16**

The same as Example 1-1 except that related preparation parameters were adjusted according to Table 4.

**Comparative Example 1**

The same as Example 1-1 except that the second separator is not provided and the lithium-ion battery is prepared according to the following method.

<Preparation of lithium-ion battery>

The prepared positive electrode plate, first separator, negative electrode plate, and first separator were stacked in sequence, and then wound to obtain an electrode assembly. An aluminum tab was used to weld and lead out a positive electrode tab and a nickel tab was used to weld and lead out a negative electrode tab. In the first separator, the first ceramic coating faced away from the negative electrode plate. The electrode assembly was placed into an aluminum-plastic film, and dried in a vacuum oven at 80°C for 12 h to remove moisture. The electrolyte was injected, followed by vacuum sealing, standing, formation (charged at a constant current of 0.02C rate to 3.5 V, and charged at a constant current of 0.1C rate to 3.9 V), grading, shaping, and other processes to obtain a lithium-ion battery.

**Comparative Example 2**

The same as Example 1-1 except that the first separator is not provided and the lithium-ion battery is prepared according to the following method.

<Preparation of lithium-ion battery>

The prepared positive electrode plate, second separator, negative electrode plate, and second separator were stacked in sequence, and then wound to obtain an electrode assembly. An aluminum tab was used to weld and lead out a positive electrode tab and a nickel tab was used to weld and lead out a negative electrode tab. In the second separator, the second ceramic coating faced away from the negative electrode plate. The electrode assembly was placed into an aluminum-plastic film, and dried in a vacuum oven at 80°C for 12 h to remove moisture. The electrolyte was injected, followed by vacuum sealing, standing, formation (charged at a constant current of 0.02C rate to 3.5 V, and charged at a constant current of 0.1C rate to 3.9 V), grading, shaping, and other processes to obtain a lithium-ion battery.

Preparation parameters and performance parameters of examples and comparative examples are shown in Table 1 to Table 4.

**Table 1**

| | | Positional relationship between separator and negative electrode plate | Type of first ceramic particles | Capacity retention rate | Thickness of lithium-ion battery (mm) | Pass rate of hot-box test at 130°C | Pass rate of hot-box test at 132°C |
|---|---|---|---|---|---|---|---|
| | Example 1-1 | The first separator is provided on the side of the first negative electrode material layer, and the second separator is provided on the side of the second negative electrode material layer | Aluminum oxide | 91.23% | 4.72 | 10/10 | 10/10 |
| | Example 1-2 | The second separator is provided on the side of the first negative electrode material layer, and the first separator is provided on the side of the second negative electrode material layer | Aluminum oxide | 85.65% | 4.72 | 10/10 | 10/10 |

(continued)

| | Positional relationship between separator and negative electrode plate | Type of first ceramic particles | Capacity retention rate | Thickness of lithium-ion battery (mm) | Pass rate of hot-box test at 130°C | Pass rate of hot-box test at 132°C |
|---|---|---|---|---|---|---|
| Example 1-3 | The first separator is provided on the side of the first negative electrode material layer, and the second separator is provided on the side of the second negative electrode material layer | Zirconium dioxide | 88.33% | 4.71 | 10/10 | 10/10 |
| Example 1-4 | The first separator is provided on the side of the first negative electrode material layer, and the second separator is provided on the side of the second negative electrode material layer | Silicon dioxide | 84.32% | 4.72 | 9/10 | 7/10 |
| Example 1-5 | The first separator is provided on the side of the first negative electrode material layer, and the second separator is provided on the side of the second negative electrode material layer | Titanium dioxide | 83.78% | 4.71 | 9/10 | 6/10 |
| Comparative Example 1 | \ | Aluminum oxide | 92.43% | 5.32 | 5/10 | 0/10 |
| Comparative Example 2 | \ | \ | 75.67% | 4.62 | 10/10 | 10/10 |
| Note: "\" in Table 1 indicates no corresponding parameter. | | | | | | |

From Example 1-1 to Example 1-5, Comparative Example 1, and Comparative Example 2, it can be seen that in the secondary battery of the embodiments of this application, with different types of the first separator and the second separator used, and with the type of the first ceramic particles in the first separator and the type of the second ceramic particles in the second separator controlled within the ranges of this application, the secondary battery can have all of high capacity retention rate, small thickness, and high pass rates in the hot-box test at 130°C and 132°C. This indicates that the secondary battery can balance the cycling performance, energy density, and safety performance. However, in Comparative Example 1 and Comparative Example 2, the secondary battery uses the same type of separators, or the types of ceramic particles in the two separators do not meet the limitations of this application. The secondary battery in the comparative examples cannot have all of high capacity retention rate, small thickness, and high pass rates in the hot-box test at 130°C and 132°C. This indicates that it is difficult for the secondary battery in the comparative examples to balance the cycling performance, energy density, and safety performance.

**Table 2**

| | Material of first base film | Material of second base film | $Tg_1$ (°C) | $Tg_2$ (°C) | Capacity retention rate | Thickness of lithium-ion battery (mm) | Pass rate of hot-box test at 130°C | Pass rate of hot-box test at 132°C |
|---|---|---|---|---|---|---|---|---|
| Example 1-1 | PET | PP+PE (mass ratio of 1:1) | 90 | 40 | 91.23% | 4.72 | 10/10 | 10/10 |
| Example 2-1 | PET | PP | 90 | 50 | 92.38% | 4.71 | 10/10 | 10/10 |

(continued)

|  | Material of first base film | Material of second base film | Tg$_1$ (°C) | Tg$_2$ (°C) | Capacity retention rate | Thickness of lithium-ion battery (mm) | Pass rate of hot-box test at 130°C | Pass rate of hot-box test at 132°C |
|---|---|---|---|---|---|---|---|---|
| Example 2-2 | PET | PE | 90 | 25 | 91.07% | 4.73 | 10/10 | 8/10 |
| Example 2-3 | Polyacrylonitrile | PP+PE (mass ratio of 1:1) | 100 | 40 | 90.89% | 4.72 | 10/10 | 10/10 |
| Example 2-4 | Polyphenylene sulfide | PP+PE (mass ratio of 1:1) | 80 | 40 | 89.63% | 4.70 | 10/10 | 10/10 |

The material and glass transition temperature of the second base film usually affect the cycling performance, energy density, and safety performance of the secondary battery. From Example 1-1 and Example 2-1 and Example 2-2, it can be seen that the secondary batteries whose second base film has a material and a glass transition temperature both fall within the ranges of this application all have a high capacity retention rate, small thickness, and high pass rate in hot-box test at 130°C and 132°C. This indicates that the secondary batteries can balance cycling performance, energy density, and safety performance.

The material and glass transition temperature of the first base film usually affect the cycling performance, energy density, and safety performance of the secondary battery. From Example 1-1 and Example 2-3 and Example 2-4, it can be seen that the secondary batteries whose first base film has a material and a glass transition temperature both fall within the range of this application all have a high capacity retention rate, small thickness, and high pass rate in hot-box test at 130°C and 132°C. This indicates that the secondary batteries can balance cycling performance, energy density, and safety performance.

**Table 3**

|  | W$_{11}$ (%) | W$_{21}$ (%) | Average particle size of first ceramic particles (μm) | Average particle size of second ceramic particles (μm) | Capacity retention rate | Thickness of lithium-ion battery (mm) | Pass rate of hot-box test at 130°C | Pass rate of hot-box test at 132°C |
|---|---|---|---|---|---|---|---|---|
| Example 1-1 | 30 | 30 | 1.0 | 0.5 | 91.23% | 4.72 | 10/10 | 10/10 |
| Example 3-1 | 10 | 30 | 1.0 | 0.5 | 87.57% | 4.71 | 10/10 | 1010 |
| Example 3-2 | 50 | 30 | 1.0 | 0.5 | 92.34% | 4.72 | 10/10 | 10/10 |
| Example 3-3 | 5 | 30 | 1.0 | 0.5 | 85.41% | 4.73 | 10/10 | 7/10 |
| Example 3-4 | 55 | 30 | 1.0 | 0.5 | 92.65% | 4.73 | 10/10 | 5/10 |
| Example 3-5 | 30 | 10 | 1.0 | 0.5 | 89.97% | 4.75 | 10/10 | 8/10 |
| Example 3-6 | 30 | 50 | 1.0 | 0.5 | 90.34% | 4.47 | 10/10 | 10/10 |
| Example 3-7 | 30 | 5 | 1.0 | 0.5 | 88.78% | 4.70 | 8/10 | 5/10 |
| Example 3-8 | 30 | 55 | 1.0 | 0.5 | 90.21% | 4.76 | 10/10 | 6/10 |
| Example 3-9 | 30 | 30 | 0.2 | 0.5 | 88.86% | 4.72 | 10/10 | 10/10 |
| Example 3-10 | 30 | 30 | 1.2 | 0.5 | 90.36% | 4.71 | 10/10 | 10/10 |
| Example 3-11 | 30 | 30 | 0.1 | 0.5 | 86.63% | 4.73 | 10/10 | 10/10 |
| Example 3-12 | 30 | 30 | 2.3 | 0.5 | 89.76% | 4.72 | 9/10 | 6/10 |
| Example 3-13 | 30 | 30 | 1.0 | 0.1 | 91.01% | 4.72 | 10/10 | 10/10 |
| Example 3-14 | 30 | 30 | 1.0 | 1.0 | 90.98% | 4.73 | 10/10 | 10/10 |

(continued)

| | $W_{11}$ (%) | $W_{21}$ (%) | Average particle size of first ceramic particles ($\mu$m) | Average particle size of second ceramic particles ($\mu$m) | Capacity retention rate | Thickness of lithium-ion battery (mm) | Pass rate of hot-box test at 130°C | Pass rate of hot-box test at 132°C |
|---|---|---|---|---|---|---|---|---|
| Example 3-15 | 30 | 30 | 1.0 | 0.05 | 89.73% | 4.71 | 10/10 | 7/10 |
| Example 3-16 | 30 | 30 | 1.0 | 1.2 | 88.67% | 4.74 | 10/10 | 6/10 |

The mass percentage $W_{11}$ of the first ceramic particles usually affects the cycling performance, energy density, and safety performance of the secondary battery. From Example 1-1 and Example 3-1 to Example 3-4, it can be seen that the secondary batteries whose first ceramic particles have a mass percentage $W_{11}$ fall within the range of this application all have a high capacity retention rate, small thickness, and high pass rate in hot-box test at 130°C and 132°C. This indicates that the secondary batteries can balance cycling performance, energy density, and safety performance. As compared with Example 1-1, Example 3-1, and Example 3-2, the mass percentage of the first ceramic particles in the first ceramic coating in Example 3-3 is lower, resulting in slightly weaker electrolyte retention and a smaller restraining effect on the first base film at high temperature, and thus offering slightly smaller improvement in the cycling performance and safety performance of the secondary battery. In Example 3-4, the mass percentage of the first ceramic particles in the first ceramic coating is higher, increasing the likelihood of the first ceramic particles puncturing the separator and causing a short circuit in the hot-box test, and thus featuring slightly lower safety performance.

The mass percentage $W_{21}$ of the second ceramic particles usually affects the cycling performance, energy density, and safety performance of the secondary battery. From Example 1-1 and Example 3-5 to Example 3-8, it can be seen that the secondary batteries whose second ceramic particles have a mass percentage $W_{21}$ fall within the range of this application all have a high capacity retention rate, small thickness, and high pass rate in hot-box test at 130°C and 132°C. This indicates that the secondary batteries can balance cycling performance, energy density, and safety performance. As compared with Example 1-1, Example 3-5, and Example 3-6, the mass percentage of the second ceramic particles in the second ceramic coating in Example 3-7 is lower, resulting in slightly weaker electrolyte retention and a smaller restraining effect on the second base film at high temperature, and thus offering slightly smaller improvement in the cycling performance and safety performance of the secondary battery. In Example 3-8, the mass percentage of the second ceramic particles in the second ceramic coating is higher, increasing the likelihood of the second ceramic particles puncturing the separator and causing a short circuit in the hot-box test, and thus featuring slightly lower safety performance.

The average particle size of the first ceramic particles usually affects the cycling performance, energy density, and safety performance of the secondary battery. From Example 1-1 and Example 3-9 to Example 3-12, it can be seen that the secondary batteries whose first ceramic particles have an average particle size fall within the range of this application all have a high capacity retention rate, small thickness, and high pass rate in hot-box test at 130°C and 132°C. This indicates that the secondary batteries can balance cycling performance, energy density, and safety performance. As compared with Example 1-1, Example 3-9, and Example 3-10, the average particle size of the first ceramic particles in Example 3-11 is lower, resulting in slightly weaker electrolyte retention, and thus offering slightly smaller improvement in the cycling performance of the secondary battery. In Example 3-12, the average particle size of the first ceramic particles is higher, increasing the likelihood of puncturing the separator and causing a short circuit in the hot-box test, and thus featuring slightly lower safety performance.

The average particle size of the second ceramic particles usually affects the cycling performance, energy density, and safety performance of the secondary battery. From Example 1-1 and Example 3-13 to Example 3-16, it can be seen that the secondary batteries whose second ceramic particles have an average particle size fall within the range of this application all have a high capacity retention rate, small thickness, and high pass rate in hot-box test at 130°C and 132°C. This indicates that the secondary batteries can balance cycling performance, energy density, and safety performance. As compared with Example 1-1, Example 3-13, and Example 3-14, the average particle size of the second ceramic particles in Example 3-15 is lower, resulting in slightly weaker electrolyte retention, and thus offering slightly smaller improvement in the cycling performance of the secondary battery. In Example 3-16, the average particle size of the second ceramic particles is higher, increasing the likelihood of puncturing the separator and causing a short circuit in the hot-box test, and thus featuring slightly lower safety performance.

**Table 4**

| | Porosity of first base film (%) | Porosity of second base film (%) | Pore size of first base film (nm) | Pore size of second base film (nm) | Capacity retention rate | Thickness of lithium-ion battery (mm) | Pass rate of hot-box test at 130°C | Pass rate of hot-box test at 132°C |
|---|---|---|---|---|---|---|---|---|
| Example 1-1 | 55 | 18 | 300 | 100 | 91.23% | 4.72 | 10/10 | 10/10 |
| Example 4-1 | 40 | 18 | 300 | 100 | 89.50% | 4.71 | 10/10 | 10/10 |
| Example 4-2 | 70 | 18 | 300 | 100 | 92.50% | 4.75 | 10/10 | 10/10 |
| Example 4-3 | 30 | 18 | 300 | 100 | 85.32% | 4.72 | 10/10 | 10/10 |
| Example 4-4 | 80 | 18 | 300 | 100 | 92.13% | 4.71 | 9/10 | 5/10 |
| Example 4-5 | 55 | 5 | 300 | 100 | 87.67% | 4.75 | 10/10 | 10/10 |
| Example 4-6 | 55 | 50 | 300 | 100 | 91.45% | 4.74 | 10/10 | 10/10 |
| Example 4-7 | 55 | 3 | 300 | 100 | 80.23% | 4.72 | 10/10 | 10/10 |
| Example 4-8 | 55 | 60 | 300 | 100 | 90.45% | 4.71 | 8/10 | 4/10 |
| Example 4-9 | 55 | 18 | 80 | 100 | 92.78% | 4.73 | 10/10 | 10/10 |
| Example 4-10 | 55 | 18 | 700 | 100 | 88.51% | 4.73 | 10/10 | 10/10 |
| Example 4-11 | 55 | 18 | 50 | 100 | 82.94% | 4.72 | 10/10 | 10/10 |
| Example 4-12 | 55 | 18 | 1500 | 100 | 84.68% | 4.73 | 10/10 | 6/10 |
| Example 4-13 | 55 | 18 | 300 | 50 | 91.98% | 4.74 | 10/10 | 10/10 |
| Example 4-14 | 55 | 18 | 300 | 200 | 89.65% | 4.75 | 10/10 | 10/10 |
| Example 4-15 | 55 | 18 | 300 | 10 | 83.15% | 4.73 | 10/10 | 10/10 |
| Example 4-16 | 55 | 18 | 300 | 1000 | 86.36% | 4.72 | 10/10 | 4/10 |

The porosity of the first base film usually affects the cycling performance, energy density, and safety performance of the secondary battery. From Example 1-1 and Example 4-1 to Example 4-4, it can be seen that the secondary batteries whose first base film has a porosity fall within the range of this application all have a high capacity retention rate, small thickness, and high pass rate in hot-box test at 130°C and 132°C. This indicates that the secondary batteries can balance cycling performance, energy density, and safety performance. With a certain pore size, as compared with Example 1-1, Example 4-1, and Example 4-2, the porosity of the first base film in Example 4-3 is lower, resulting in slightly greater lithium ion transmission resistance and slightly poorer cycling performance of the secondary battery. The porosity of the first base film in Example 4-4 is higher, resulting in lower strength of the first base film and lower pass rate in the hot-box test of the secondary battery. The porosity of the second base film usually affects the cycling performance, energy density, and safety performance of the secondary battery. From Example 1-1 and Example 4-5 to Example 4-8, it can be seen that the secondary batteries whose second base film has a porosity fall within the range of this application all have a high capacity retention rate, small thickness, and high pass rate in hot-box test at 130°C and 132°C. This indicates that the secondary batteries can balance cycling performance, energy density, and safety performance. With a certain pore size, as compared with Example 1-1, Example 4-5, and Example 4-6, the porosity of the second base film in Example 4-7 is lower, resulting in slightly greater lithium ion transmission resistance and slightly poorer cycling performance of the secondary battery. The porosity of the second base film in Example 4-8 is higher, resulting in lower strength of the second base film and lower pass rate in the hot-box test of the secondary battery.

The pore size of the first base film usually affects the cycling performance, energy density, and safety performance of the secondary battery. From Example 1-1 and Example 4-9 to Example 4-12, it can be seen that the secondary batteries whose first base film has a pore size fall within the range of this application all have a high capacity retention rate, small thickness, and high pass rate in hot-box test at 130°C and 132°C. This indicates that the secondary batteries can balance cycling performance, energy density, and safety performance. With a certain porosity, as compared with Example 1-1, Example 4-9, and Example 4-10, the pore size of the first base film in Example 4-11 is lower, resulting in slightly greater lithium ion transmission resistance and slightly poorer cycling performance of the secondary battery. The pore size of the first base film in Example 4-12 is higher, resulting in lower strength of the first base film and lower pass rate in the hot-box test of the secondary battery.

The pore size of the second base film usually affects the cycling performance, energy density, and safety performance of the secondary battery. From Example 1-1 and Example 4-13 to Example 4-16, it can be seen that the secondary batteries whose second base film has a pore size fall within the range of this application all have a high capacity retention rate, small thickness, and high pass rate in hot-box test at 130°C and 132°C. This indicates that the secondary batteries can balance cycling performance, energy density, and safety performance. With a certain porosity, as compared with Example 1-1, Example 4-13, and Example 4-14, the pore size of the second base film in Example 4-15 is lower, resulting in slightly greater lithium ion transmission resistance and slightly poorer cycling performance of the secondary battery. The pore size of the second base film in Example 4-16 is higher, resulting in lower strength of the second base film and lower pass rate in the hot-box test of the secondary battery.

It should be noted that relational terms such as "first" and "second" are only used to distinguish one entity or operation from another entity or operation, and do not necessarily require or imply that there is any such actual relationship or order between these entities or operations. Terms "include", "comprise", or any other variations thereof are intended to cover non-exclusive inclusions, such that a process, method, article or device including a series of elements not only includes these elements, but also includes other elements which are not expressly listed, or further includes elements which are inherent to such process, method, or article.

The embodiments in this specification are described in a related manner. For a part that is the same or similar between different embodiments, reference may be made between the embodiments. Each embodiment focuses on differences from other embodiments.

The foregoing descriptions are merely preferable embodiments of this application, but are not intended to limit this application. Any modification, equivalent replacement, or improvement made without departing from the spirit and principle of this application shall fall within the protection scope of this application.

**Claims**

1. A secondary battery, comprising an electrode assembly (100), **characterized in that**,

   the electrode assembly (100) is a wound structure; the electrode assembly (100) comprises a positive electrode plate (40), a negative electrode plate (30), a first separator (10), and a second separator (20); the negative electrode plate (30) is located between the first separator (10) and the second separator (20); wherein
   the first separator (10) comprises a first base film (11), two first bonding layers (12), and a first ceramic coating (13);the two first bonding layers (12) are located on two sides of the first base film (11) respectively, the first ceramic coating (13) is located on a surface on one side of the first base film (11), the first ceramic coating (13) is located between the first base film (11) and one of the two first bonding layers (12), the first ceramic coating (13) comprises first ceramic particles; the first ceramic particles comprise at least one of aluminum oxide, zirconium dioxide, titanium dioxide, or silicon dioxide; and
   the second separator (20) comprises a second base film (21), two second bonding layers (22), and a second ceramic coating (23); the second bonding layers (22) are located on two sides of the second base film (21) respectively, the second ceramic coating (23) is located on a surface on one side of the second base film (21), the second ceramic coating (23) is located between the second base film (21) and one of the two second bonding layers (22), the second ceramic coating (23) comprises second ceramic particles, and the second ceramic particles comprise boehmite.

2. The secondary battery according to claim 1, **characterized in that**, the negative electrode plate (30) comprises a negative electrode current collector (31), a first negative electrode material layer (33) and a second negative electrode material layer (34), the first negative electrode material layer (33) and the second negative electrode material layer (34) are located on two sides of the negative electrode current collector (31) respectively; along a winding direction of the electrode assembly (100), a length of the first negative electrode material layer (33) is larger than a length of the second negative electrode material layer (34), the first separator (10) is located on the side of the first negative electrode material layer (33) of the negative electrode plate (30), and the second separator (20) is located on the side of the second negative electrode material layer (34) of the negative electrode plate (30).

3. The secondary battery according to claim 2, **characterized in that**, the first base film (11) comprises at least one of polyimide, polyamide, polysulfone, polyacrylonitrile, polyester, cellulose, polyether ether ketone, polyphenylene sulfide, polyacrylate, polyethylene terephthalate, poly(p-benzamide), polyaryl ether sulfone ketone, aramid, or polysulfonamide; the second base film (21) is made of polyolefin, and a polymer monomer of the polyolefin comprises at least one of ethylene, propylene, 1-butene, 1-pentene, 1-hexene, 1-octene, 4-methyl-1-pentene, cyclobutene, cyclopentene, or cyclohexene.

4. The secondary battery according to any one of claims 1 to 3, **characterized in that**, an average particle size of the first ceramic particles is 0.2 μm to 1.2 μm, and an average particle size of the second ceramic particles is 0.1 μm to 1.0 μm.

5. The secondary battery according to any one of claims 1 to 3, **characterized in that**, based on a mass of the first ceramic coating (13), a mass percentage of the first ceramic particles is 10% to 50%; and based on a mass of the second ceramic coating (23), a mass percentage of the second ceramic particles is 10% to 50%.

6. The secondary battery according to any one of claims 1 to 3, **characterized in that**, the first base film (11) is made of polyethylene terephthalate, and the second base film (21) is made of at least one of polypropylene or polyethylene.

7. The secondary battery according to claim 6, **characterized in that**, a glass transition temperature of the first base film (11) is 80°C to 100°C, and a glass transition temperature of the second base film (21) is 25°C to 50°C.

8. The secondary battery according to claim 6, **characterized in that**, a porosity of the first base film (11) is 40% to 70%, and a porosity of the second base film (21) is 5% to 50%.

9. The secondary battery according to claim 6, **characterized in that**, a pore size of the first base film (11) is 80 nm to 700 nm, and a pore size of the second base film (21) is 50 nm to 200 nm.

10. An electric apparatus, comprising the secondary battery according to any one of claims 1 to 9.

W →

**100**

40

22
23
21
22 } 20

30

12
13
11
12 } 10

FIG. 1

W →

**100**

42
41
42 } 40

22
23
21
22 } 20

$L_{34}$

34
31
33 } 30

$L_{33}$

12
11
13
12 } 10

FIG. 2

FIG. 3

## EUROPEAN SEARCH REPORT

Application Number

EP 25 16 2683

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 115 472 921 A (JIANGSU TIANHE ENERGY STORAGE CO LTD) 13 December 2022 (2022-12-13) * claims 1,2,4,5,7,8; examples * | 1-10 | INV. H01M10/0525 H01M50/403 H01M50/446 H01M50/457 |
| A | CN 116 345 070 A (NINGDE AMPEREX TECHNOLOGY LTD) 27 June 2023 (2023-06-27) * claim 1; examples * | 1-10 | |

TECHNICAL FIELDS SEARCHED (IPC)

H01M

The present search report has been drawn up for all claims

| Place of search | Date of completion of the search | Examiner |
|---|---|---|
| Munich | 5 August 2025 | Duval, Monica |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 2683

This annex lists the patent family members relating to the patent documents cited in the above-mentioned European search report.
The members are as contained in the European Patent Office EDP file on
The European Patent Office is in no way liable for these particulars which are merely given for the purpose of information.

05-08-2025

| Patent document cited in search report | Publication date | Patent family member(s) | Publication date |
|---|---|---|---|
| CN 115472921 A | 13-12-2022 | NONE | |
| CN 116345070 A | 27-06-2023 | NONE | |

EPO FORM P0459

For more details about this annex : see Official Journal of the European Patent Office, No. 12/82